# EUROPEAN PATENT APPLICATION

(11) **EP 0 730 001 A1**
(43) Date of publication of application: **04.09.1996**
(21) Application number: 96101919.7
(22) Date of filing: 09.02.1996
(51) Int. Cl.: C08K 5/00

(54) **Stabilizers for plastic materials**

(30) Priority: 22.02.1995 US 392454
(71) Applicant: F. HOFFMANN-LA ROCHE AG, 4070 Basel (CH)
(72) Inventor: Young, Sai-Shek, Spring Valley, N.Y. 10977 (US)
(74) Representative: Kellenberger, Marcus, Dr.

(57) **Abstract**

A phosphite- and phosphonite- free stabilizing mixture for plastic materials comprises (a) a α-tocopherol solution consisting of α-tocopherol, glycerol, a glyceride surfactant and polyethylene glycol and (b) (i) tetrakis[methylene(3,5-di-tert.butyl-4-hydroxyhydrocinnamate)]methane and/or (ii) n-octadecyl 3,5-di-tert.butyl-4-hydroxyhydrocinnamate. Such a stabilizing mixture can be produced by physically mixing the components (a) and (b) with each other. The invention also concerns plastic materials, or articles made therefrom, having incorporated therein the aforementioned stabilizing mixture, and the use of said stabilizing mixture for stabilizing plastic materials. By the use of the stabilizing mixture the problems associated with phosphite and phosphonite stabilizers can be minimized or eliminated.

## Description

This invention relates to stabilizers for plastic materials, and more particularly to a stabilizing mixture comprising a α-tocopherol solution and one or two phenolic compounds, each of which is more specifically defined hereinbelow.

Phosphites and phosphonites have been well regarded for years as efficient hydroperoxide decomposers, often giving synergistic effects in combination with the more efficient peroxy radical-scavenging phenolic antioxidants. However, some of the commonly used phosphites are hydrolytically unstable, can cause corrosion and handling problems during transfer and mixing, and occasionally form "black specks" during extrusion at higher temperatures and longer residence times. Further, some show an adverse effect on organoleptic properties, which can limit their use in materials for packaging applications. Despite much continued work towards new phosphites and phosphonites with incrementally better properties, there has been a need for a phosph(on)ite-free phenolic stabilizer, particularly antioxidant, system for plastic materials.

Aside from its inherent safety [it is edible and generally regarded as safe ("GRAS")] and its suitable physical properties, α-tocopherol, also known as vitamin E, is an effective scavenger of oxy radicals, such as hydroperoxy, alkoxy, hydroxy, phenoxy, etc. It is also very reactive towards less electrophilic radicals such as alkyl, towards hydroperoxides, excited states of ketones, excited states of molecular oxygen (singlet oxygen), ozone, superoxide, nitrogen oxides, and other reactive species associated with oxidative damage.

In many cases the relative reactivity of tocopherol has been found to be orders of magnitude greater (faster) than those of other phenolics. Its transformation products include materials which are also effective oxy radical and carbon radical scavengers.

Like most phenolics, α-tocopherol forms some colored transformation products. Some earlier attempts to use it for polyolefin stabilization have failed because investigators did not appreciate the opportunity to use the much lower amounts of tocopherol which its unusual reactivity affords. In many cases appropriately lower levels of tocopherol now give very good stabilization with acceptable color results, notably in polyethylenes. To improve results in more demanding applications, a formulation of α-tocopherol with glycerol and glycerol surfactants has been developed.

Secondary antioxidants such as phosphites and phosphonites have for many years played a very important role in the stabilization of polyolefins. As peroxide decomposers, they must compete effectively with the polymer substrate RH for the chain-propagating alkyl peroxy radicals ROO• and they must also form an efficient chain-terminating agent in this reaction with the ROO• radicals. The antioxidative efficiency of the phosphites is greatly affected by the polar and steric effects of the groups bound to phosphorus, decreasing with increasing electron-acceptor ability, and by the bulkiness of the substituent groups. They must also be hydrolytically stable to be blended and mixed thoroughly and homogeneously with the primary phenolic antioxidants. The hydrolytic stability of phosphites improves as the number of phosphorus-carbon bonds increases. Unfortunately, the most effective phosphites which are currently commercially available are not very hydrolytically stable and can cause mixing and handling problems for the polymer producers, convertors and compounders. The commonly used phosphites occasionally form "black specks" during extrusion at high temperature and for long residence time. Besides hydrolytic instability problems, phosphites also show an adverse effect on the organoleptic properties, which can limit their use in the packaging industry. Therefore, there is a strong desire and interest to develop a phosph(on)ite-free phenolic antioxidant system. It is also an object of the present invention to provide a plastic material, e.g. polyolefin, composition that is stabilized with a phosph(on)ite-free antioxidant system.

Accordingly, the present invention provides a (phosphite- and phosphonite-free) stabilizing mixture for plastic materials, which stabilizing mixture comprises the components (a) a α-tocopherol solution consisting of α-tocopherol, glycerol, a glyceride surfactant and polyethylene glycol, and (b) (i) tetrakis[methylene(3,5-di-tert.butyl-4-hydroxyhydrocinnamate)]methane and/or (ii) n-octadecyl 3,5-di-tert.butyl-4-hydroxyhydrocinnamate.

The term "glyceride surfactant" as used herein refers in principle to any ester of glycerol which exhibits surfactant properties, particularly emulsifying properties, and embraces mono-, di- and triesters (i.e. mono-, di- and triglycerides, respectively) and mixtures of two or more of such types having the aforementioned properties. Any di- or triglyceride may feature the same or different acyl groups in the same molecule. Particularly suitable are the mono- and diglycerides such as those available from the Drew Chemical and Karlshamns companies. A preferred glyceride surfactant is that known as glyceryl monocaprylate caprate and available as "Drewmulse GMC-8" and "Capmul MCM", respectively. Accordingly, the glyceride surfactant constituent of the α-tocopherol solution [component (a) of the stabilizing mixture of the present invention] is preferably glyceryl monocaprylate caprate.

Component (b) of the stabilizing mixture of the present invention can consist of the compound (i) alone or of the compound (ii) alone or of a mixture of the compounds (i) and (ii) in any desired weight ratio. However, it preferably consists of only the one or the other compound, most preferably compound (i). This compound (i), which not only can be designated as tetrakis[methylene(3,5-di-tert.butyl-4-hydroxyhydrocinnamate)]methane, can also be named pentaerythrityl tetrakis(3,5-di-tert.butyl-4-hydroxyphenyl)propionate or tetrakis[methylene-3-(3',5'-di-tert.butyl-4'-hydroxyphenyl)propionate]methane, and is available commercially as Irganox 1010. The other compound, (ii), can be named n-octadecyl 3,5-di-tert.butyl-4-hydroxyhydrocinnamate (as given above) or stearyl β-(3,5-di-tert.butyl-4-hydroxyphenyl)-propionate and is itself available commercially as Irganox 1076.

Preferably, the stabilizing mixture of the present invention consists essentially of components (a) and (b) in a weight ratio of from about 2:1 to about 6:1, with a ratio of from about 2:1 to about 3:1 being most preferred.

As regards the relative amounts of the four constituents of component (a) of the stabilizing mixture of the present invention, said component (a) conveniently contains from about 10 to about 26 percent by weight of α-tocopherol; from about 16 to about 20 percent by weight of glycerol; from about 42 to about 50 percent by weight of the glyceride surfactant; and from about 16 to about 20 percent by weight of polyethylene glycol, whereby the total weight percent of these four constituents is 100. Preferably these ranges are about 10 to 20, 16 to 20, 43 to 50 and 17 to 20 percent by weight, respectively. Three particularly preferred embodiments of the component (a) contain α-tocopherol, glycerol, glyceryl monocaprylate caprate and polyethylene glycol in the percents by weight about 10, 20, 50 and 20, respectively (first embodiment), 20, 20, 43 and 17, respectively (second embodiment) and 26, 16, 42 and 16, respectively (3rd embodiment).

As used herein, the term "plastic material(s)" refers to, amongst others, polyolefins. Polyolefins themselves include, but are not limited to, (1) polyethylene, e.g. high density polyethylene, low density polyethylene, linear low density polyethylene, and ultra high molecular weight polyethylene, which contain as one of the repeating units in a copolymer the polyethylene monomer moiety, and blends of polyethylene with one or more other polymers; and (2) polypropylene, e.g. polypropylene homopolymers, copolymers which contain as one of the repeating units the polypropylene monomer moiety, and blends of polypropylene with one or more other polymers. Those skilled in the art will appreciate and will known how to make the different types of copolymers that can be formed with polyethylene and/or polypropylene, including alternating, block and graft copolymers, as well as how to make the blends of polyethylene and/or polypropylene with other polymers. Plastic materials also include polyvinyl chlorides, styrene polymers, including copolymers thereof, and polyurethanes. Such polymers may be amongst those which can be blended with polyethylene and/or polypropylene.

The stabilizing mixtures of the present invention may be produced by simple physical mixing of the components (a) and (b) with each other in the desired weight ratio. Preferably, an intimate, homogeneous mixture of the two components is achieved. The process of admixture and the equipment used for this purpose are well known per se to persons skilled in the art. The physical mixing process represents a further aspect of the present invention. As an alternative, the components (a) and (b) can be separately added to the plastic material for stabilization so as to achieve the desired ratio.

The stabilizing mixture of the present invention, conveniently featuring the ratio of (a):(b) of from about 2:1 to about 6:1 by weight, produces improved processing stability and color stability, while maintaining the heat aging stability, of the plastic material, for example, polyethylene or polypropylene, incorporating such a mixture.

The methods of incorporating the stabilizing mixture of the present invention into the plastic material to be stabilized may be effected by conventional methods which are generally used for the stabilization of plastic materials by additives. These method are well known per se by persons skilled in the pertinent art and may involve the incorporation of the stabilizing mixture as such or of the component (a) and (b) individually, in the correct ratio, at any convenient stage of the manufacture or processing of the plastic material. In one embodiment, a small portion of the total stabilizing mixture is added immediately after the polymerization itself, just before the subsequent drying stage, and the rest is incorporated during the subsequent pelletizing stage.

In each case, the stabilizing mixture according to the present invention is generally incorporated in a concentration of from about 0.01 to about 0.5%, preferably from about 0.03 to about 0.1%, by weight based on the total weight of the components (a) and (b) in relation to the weight of the plastic material to be stabilized.

In general, the stabilizing formulations are particularly effective in stabilizing the plastic material in which they are incorporated against undesired discoloration.

The present invention comprises as a further aspect plastic materials, and articles manufactures therefrom, characterized in that they have been stabilized by incorporation therein of a stabilizing mixture in accordance with the present invention and as defined hereinabove. Moreover, the use of these stabilizing mixtures for stabilizing plastic materials also represents a further aspect of the present invention.

The following Example illustrates the present invention in its various aspects.

### Example

The effects of the stabilizing mixtures of the present invention for stabilizing seven polymers, i.e. two high density polyethylenes (HDPE 1 and 2) based on Phillips and Ziegler type catalysts system and five polypropylenes (PP 1-5) manufactured by different processes or catalyst systems were studied. Further details of the polypropylenes PP 1-5 are as follows:
PP-1 : Spheripol, Unipol - super high activity catalyst (SHAC); available from Shell.
PP-2 : GF-2A catalyst, a type of Ziegler-Natta catalyst based on titanium and magnesium chlorides - bulk loop; available from Solvay.
PP-3 : Modified Phillips bulk loop; available from Fina.
PP-4 : Gas phase, Unipol; available from Epsilon.
PP-5 : Gas phase, Mitsui-Himont process; available from Montell, formerly Himont.

These polymers are unstabilized.

Additional tests such as oven-aging at 120°C and 150°C and film extrusion to quantify the effect of additives on gel formation were conducted with selected polymers.

All seven polymer substrates were subjected to multiple extrusions of five passes at 260°C through a 35 mm diameter (D) conical co-rotating twin-screw extruder. The change in color (yellow index, YI) and melt flow rates (MFR) were measured according to the American Society for Testing and Materials (ASTM) standard procedures ASTM D-1925 and ASTM D-1238, respectively. PP-3 was also extruded into films and examined by a laser scanner [Film Quality Analyzer (FQA), manufactured by Brabender Instruments, Hackensack, NJ] to compare the effect of different antioxidant (AO) packages on gel formation during film extrusion. In all cases, a combination of a phenolic AO and a phosphite was used as a standard for comparison. The antioxidants used in this study were: Tetrakis[methylene(3,5-di-tert.butyl-4-hydroxyhydrocinnamate)]methane [abbreviated as AO-1010; compound (i)]; n-octadecyl 3,5-di-tert.butyl-4-hydroxyhydrocinnamate [abbreviated as AO 1076; compound (ii)]; α-tocopherol (abbreviated as R-201); α-tocopherol formulation based on glycerol, a glyceride surfactant (specifically, glyceryl caprylate caprate) and polyethylene glycol (PEG) [the formulation being abbreviated as CF-120]; Tris (2,4-di-tert.butylphenyl)phosphite [abbreviated as P-168]; and Bis(2,4-di-tert.butylphenyl)pentaerythritol diphosphite [abbreviated as P-626]. The stabilizing mixture designated as CF-120 consists of α-tocopherol, glycerol, glyceryl caprylate caprate and polyethylene glycol in the weight percents 20, 20, 43 and 17, respectively.

### (A) HDPE - 1 (Phillips Cr Catalyst)

Table I shows the performance of two commonly used phenolic and phenolic/phosphite standards, viz. AO-1010 alone at 500 ppm and the combination of AO-1010 and P-168 at 400 ppm each, compared to the "phosphite-free" systems of CF-120 alone at 400 ppm and the combination of AO-1010 and CF-120 at the very low level of 100 ppm and 200 ppm, respectively. While all AO systems provided similar melt flow protection during processing, excellent color was provided by CF-120. When replacing P-168 with CF-120 in the phenolic/phosphite combination, tremendous color improvement was also observed.

### (B) HDPE - 2 (Ziegler Catalyst)

This blow-molding resin underwent the same test treatment as HDPE - 1, and similar good results were observed. The improvement in color offered by CF-120 is once again demontrated in Table I. To eliminate the handling, mixing (i.e. hydrolytic instability) and processing problems (i.e. black specks) which are associated with common phosphites in the phenolic/phosphite systems, CF-120 can be used to replace P-168. It worked extremely well with AO-1010, reducing the color to that of the original blank resin and maintaining the same melt flow stability provided by AO-1010 alone or the AO-1010/P-168 combination.

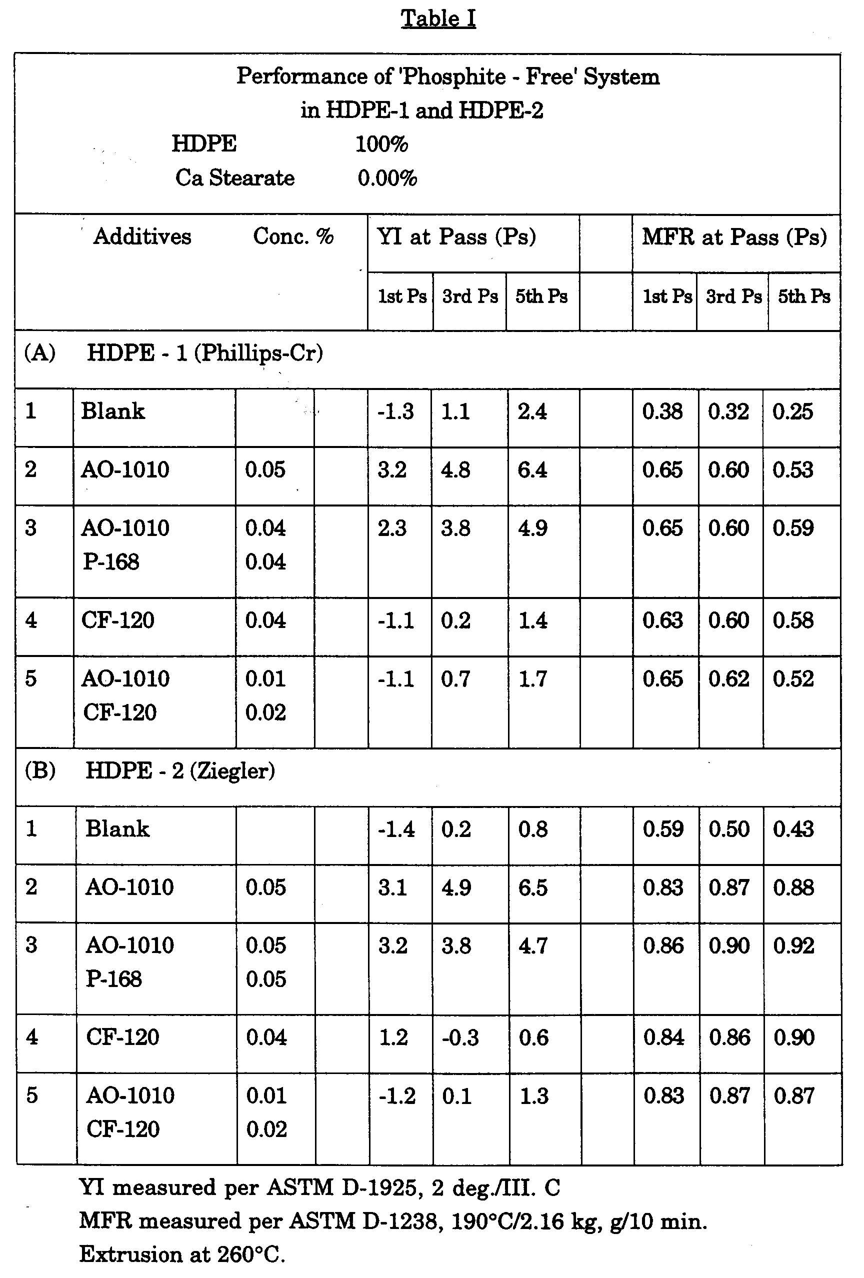

### (C) PP-1 to PP-5

Five PP resins representing the current polymerization technology were examined. In Tables II, III and IIIA, the "phosphite-free" systems of CF-120 alone and in combination with AO-1010 or AO-1076 were evaluated against the current state of the art phenolic/phosphite system. Essentially, these "phosphite-free" systems, especially the CF-120/AO-1010 and CF-120/AO-1076 combinations, offered better or equivalent color and melt flow performance and the benefit of being able to avoid the problems associated with phosphites.

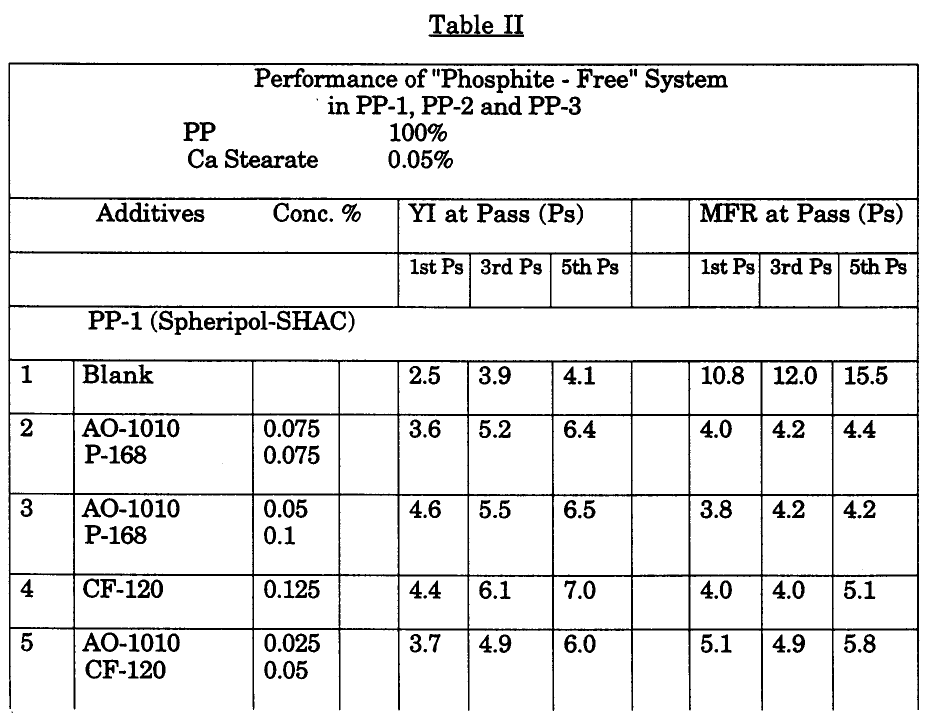

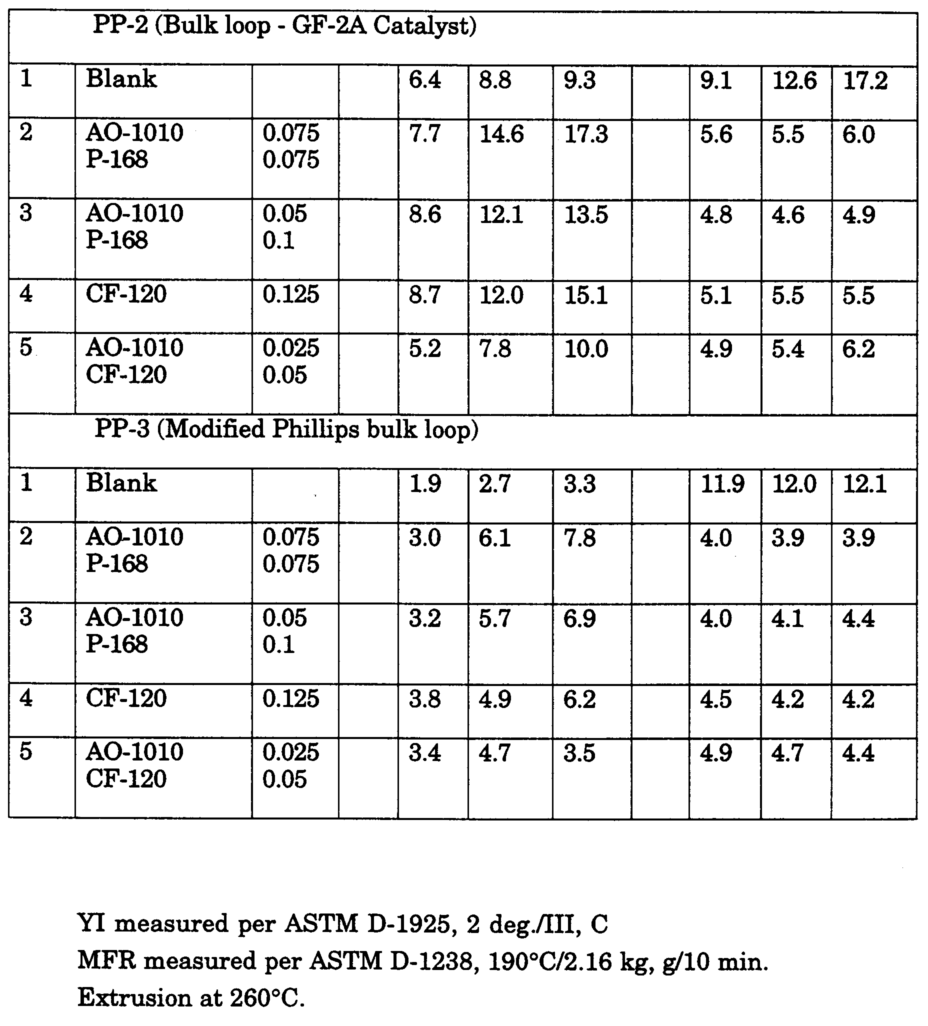

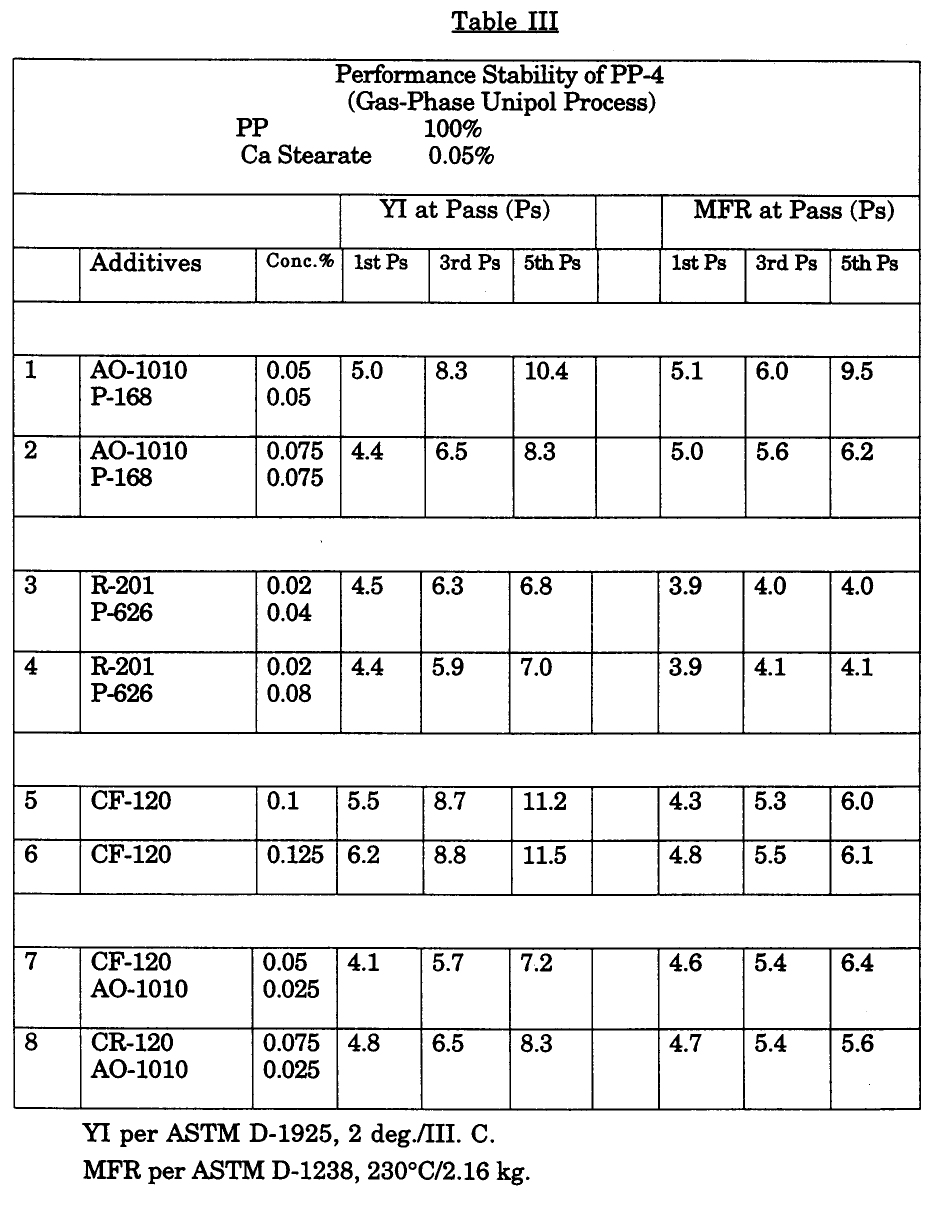

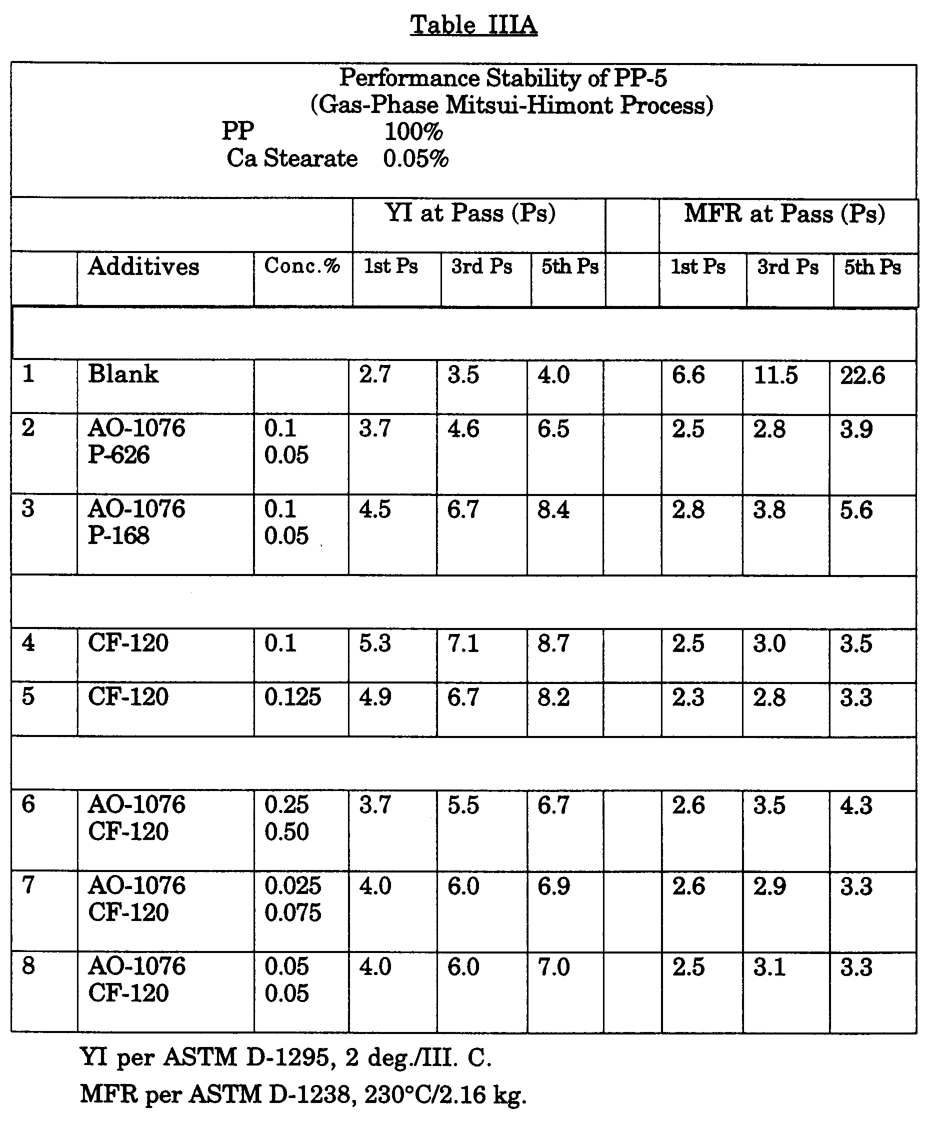

Some formulations of PP-4 (Gas-phase Unipol) were further submitted to oven-aging at 120°C and 150°C (Table IV). At the harsh condition of 150°C, all samples failed in five days while at 120°C, a better predictive value for normal usage, the AO-1010/P-168, AO1010/CF-120 samples showed a service life of over 63 days (test terminated at 63 days).

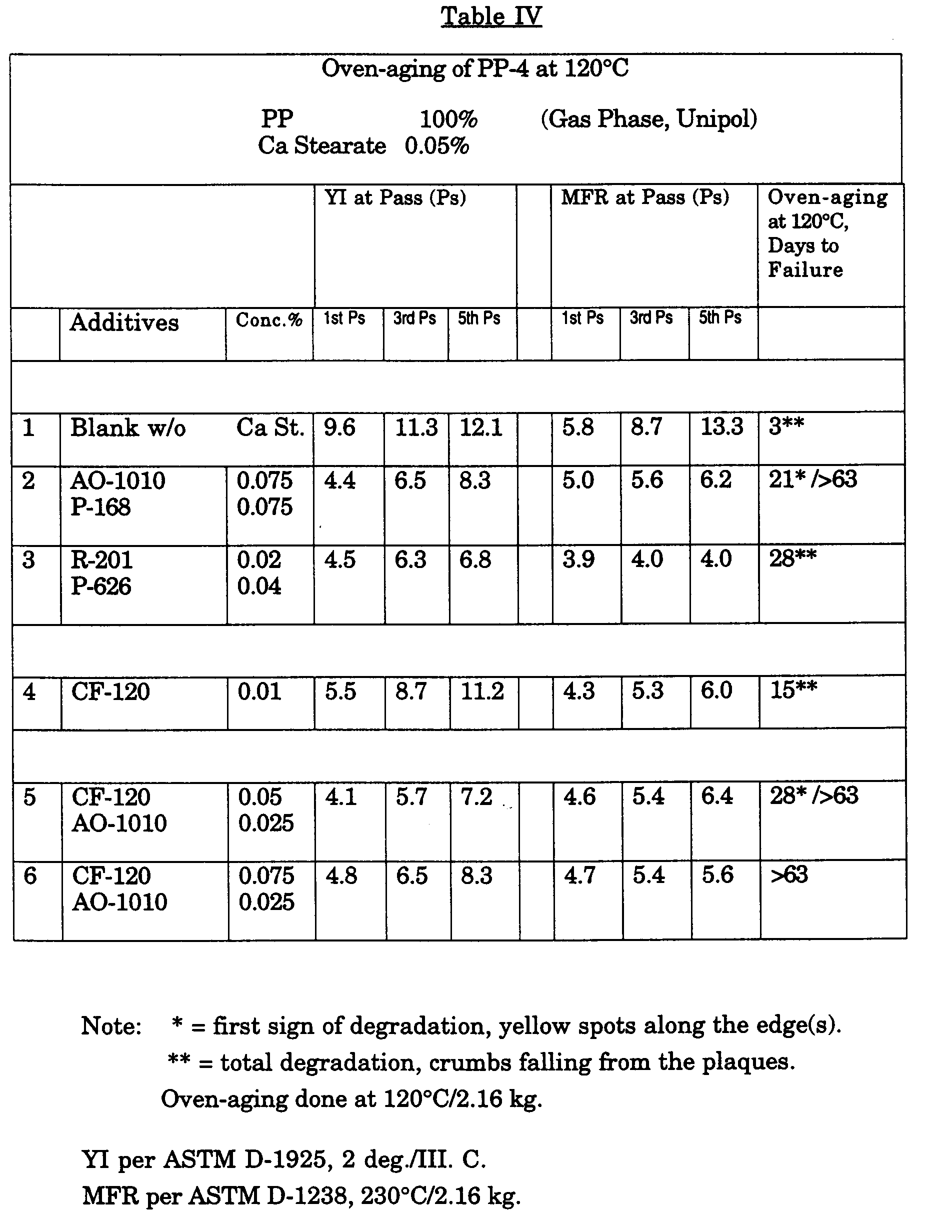

### Gel Reduction in HDPE and PP Film Extrusion

### (A) HDPE

Table V shown the improvement in gel reduction in processing a HDPE resin into film at two temperatures, 191°C and 246°C. Both R-201 and CF-120 showed an improvement over AO-1010. This experiment was conducted by visually examining a film of dimension (width x length x thickness) 76 mm x 304 mm x 0.076 mm (W x L x T).

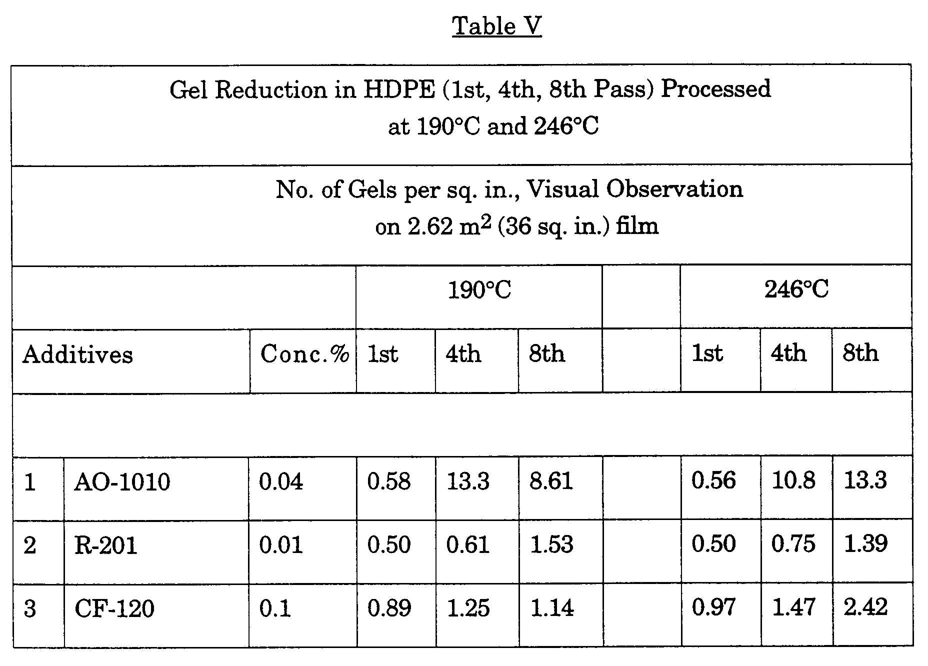

Single Screw Brabender Extruder: D=19 mm, L/D=20:1

### (B) PP-3 (Modified Phillips Bulk Loop Process)

A gel analysis experiment was conducted with PP-3 using a computerized Film Quality Analyser (FQA). Five formulations were examined (the blank resin without any additive, AO-1010/P-168 at 500/1000 ppm, R-201/P-626 at 200/400 ppm and CF-120 at 1250 ppm alone without any phosphite and the combination of AO-1010/CF-120 at 250/500 ppm each). All formulations contained 500 ppm of calcium stearate. The experiment was conducted at a melt temperature of 220°C. The FQA picked up the extruded PP film (i.e. 10.16 cm D) between a set of rollers under a well-illuminated 50 mm video camera window. The FQA separated the gels into different classes depending on the size, counted the number of gels in each class, and then normalized the number of gels, using its built-in calibration, over an area of one square meter. Therefore, the resulting data were segregated as "number of particles per square meter" for six different classes of gel sizes. Film imperfections or gels in class 3 and 4 (i.e. 52 µm to 250 µm) are most visible to human eyes (Table VI).

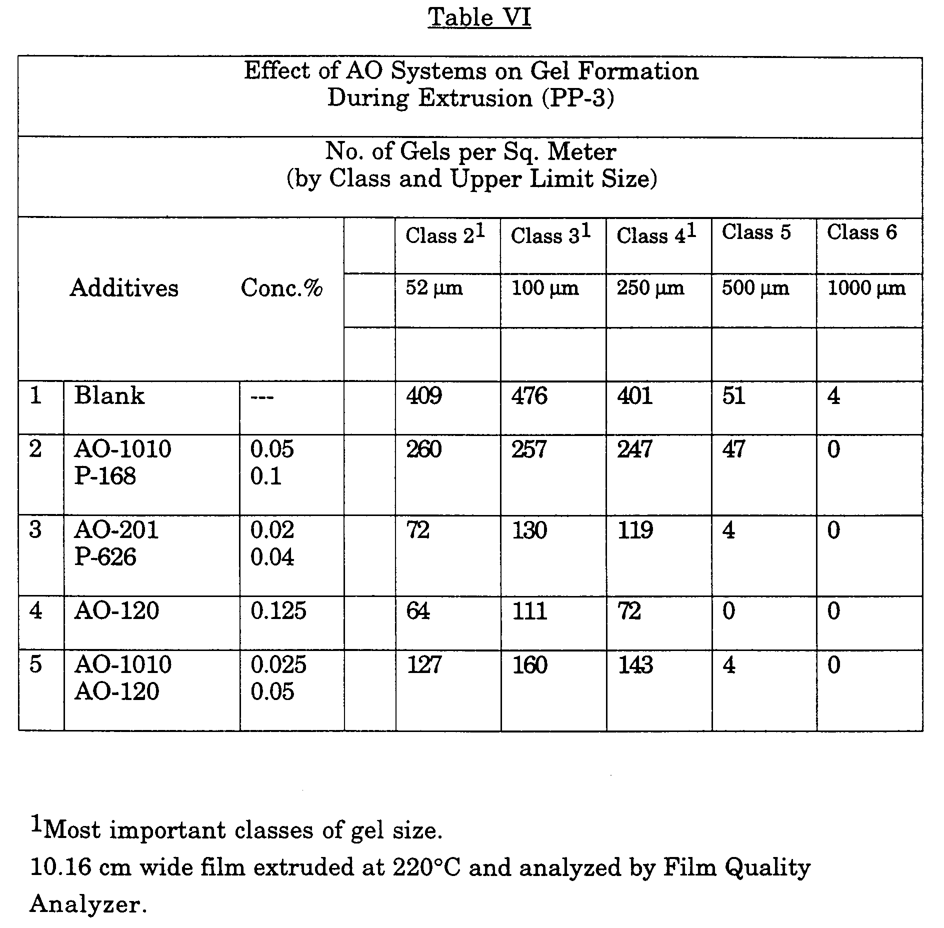

The data show that the "phosphite free" system of CF-120 alone and the AO-1010/CF-120 combination provided excellent gel reduction.

## Claims

1. A stabilizing mixture for plastic materials, which stabilizing mixture comprises the components
(a) a α-tocopherol solution consisting of α-tocopherol, glycerol, a glyceride surfactant and polyethylene glycol
and (b) (i) tetrakis [methylene(3,5-di-tert.butyl-4-hydroxyhydrocinnamate)]methane and/or (ii) n-octadecyl 3,5-di-tert.butyl-4-hydroxyhydrocinnamate.

2. A stabilizing mixture according to claim 1, wherein the glyceride surfactant is glyceryl monocaprylate caprate.

3. A stabilizing mixture according to claim 1 or 2, wherein the weight ratio of component (a) to component (b) is from about 2:1 to about 6:1.

4. A stabilizing mixture according to claim 3, wherein the weight ratio of component (a) to component (b) is from about 2:1 to about 3:1.

5. A stabilizing mixture according to any one of claims 1 to 4, wherein the component (a) contain from about 10 to about 26 percent by weight of α-tocopherol, from about 16 to about 20 percent by weight of glycerol, from about 42 to about 50 percent by weight of the glyceride surfactant and from about 16 to about 20 percent by weight of polyethylene glycol, whereby the total weight percent of these four constituents is 100.

6. A stabilizing mixture according to claim 5, wherein the weight percentages of α-tocopherol, glycerol, the glyceride surfactant and polyethylene glycol are about 10 to 20, about 16 to 20, about 43 to 50 and about 17 to 20, respectively.

7. A process for producing a stabilizing mixture as claimed in any one of claims 1 to 6 comprising physically mixing the components (a) and (b) with each other, preferably to afford an intimate, homogeneous mixture of said two components.

8. A plastic material, and any article manufactures therefrom, characterized in that it has been stabilized by incorporation therein of a stabilizing mixture as claimed in any one of claims 1 to 6.

9. A plastic material or article according to claim 8, characterized in that the stabilizing mixture is incorporated in a concentration of from about 0.01 to about 0.5%, preferably from about 0.03 to about 0.1%, by weight based on the total weight of the components (a) and (b) in relation to the weight of the plastic material to be stabilized.

10. The use of a stabilizing mixture as claimed in any one of claims 1 to 6 for stabilizing a plastic material.
